# FASCICULE DE BREVET EUROPEEN

(11) **EP 1 255 702 B1**
(45) Date de publication et mention de la délivrance du brevet: **16.07.2003**
(21) Numéro de dépôt: 00981455.9
(22) Date de dépôt: 22.11.2000
(51) Int. Cl.: C03B 37/04

(54) **PROCEDE ET DISPOSITIF DE FORMATION DE LAINE MINERALE PAR CENTRIFUGATION INTERNE**
VERFAHREN UND VORRICHTUNG ZUR HERSTELLUNG VON MINERALWOLLE MITTELS INNERLICHER ZENTRIFUGALKRAFT
METHOD AND DEVICE FOR FORMING MINERAL WOOL BY INTERNAL CENTRIFUGING

(30) Priorité: 24.11.1999 FR 9914768
(43) Date de publication de la demande: 13.11.2002
(73) Titulaire: SAINT-GOBAIN ISOVER, 92400 Courbevoie (FR)
(72) Inventeur: GUYOT, Daniel, F-60290 Rantigny (FR); PIERUCCI, Laurent, Kansas City, KS 64116 (US); DECKER, Pascal, F-67000 Strasbourg (FR)
(74) Mandataire: Muller, René
(86) Numéro de dépôt international: FR0003243
(87) Numéro de publication internationale: WO01038245

(56) Documents cités:
- EP-A- 0 189 354
- WO-A-97/15532

## Description

L'invention a trait aux techniques de formation de fibres minérales ou d'autres matériaux thermoplastiques par le procédé de centrifugation interne associée à un étirage par un courant gazeux à haute température. Elle s'applique notamment à la production industrielle de laine de verre destinée à entrer par exemple dans la composition de produits d'isolation thermique et/ou acoustique.

Le procédé de formation de fibres auquel se rapporte l'invention consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz.

Ce procédé a fait l'objet de nombreux perfectionnements. Ainsi, le brevet EP-0 189 354 B1 porte sur un brûleur amélioré générant le courant annulaire d'étirage, brûleur à combustion interne comprenant une chambre de combustion annulaire.

La demande de brevet WO-A1-97/15532 porte également sur une amélioration de ce brûleur, amélioration consistant en ce que les gaz d'étirage présentent radialement un gradient de température, en étant plus chauds à proximité du centrifugeur.

Le brevet EP-0 519 797 B1 porte sur l'ajout d'une couronne de soufflage disposée à une distance radiale de l'axe du centrifugeur supérieure à celle du brûleur générant les gaz d'étirage, cette couronne de soufflage émettant des jets de gaz individualisés et divergents qui se rejoignent en dessous de la rangée d'orifices la plus basse du centrifugeur et qui ont pour fonction de générer une nappe gazeuse froide venant canaliser les fibres étirées à chaud.

L'invention s'intéresse plus particulièrement, sans caractère limitatif cependant, aux produits d'isolation thermique et/ou phonique présentant des propriétés mécaniques particulièrement élevées, pour des applications spécifiques nécessitant de telles propriétés. Il s'agit notamment des produits d'isolation supportant des éléments de maçonnerie et qui doivent par conséquent résister à des fortes compressions tels que les éléments servant à l'isolation des toitures-terrasses accessibles à la circulation. C'est aussi le cas des produits utilisés en isolation pour l'extérieur et qui doivent pouvoir, notamment, résister aux efforts à l'arrachement.

Pour atteindre ces performances, ce type de produit d'isolation est généralement de forte densité, par exemple d'au moins 40 kg/m³, et a subi, après l'opération de fibrage à proprement dire, une opération visant à ce que les fibres à l'intérieur du feutre prennent des directions aussi variées que possible sans trop modifier de façon sensible l'orientation générale de la nappe de fibres issue de la centrifugation. Cette opération consiste notamment en un "crêpage" des fibres, obtenu par passage de la nappe de fibres entre deux séries de convoyeurs délimitant ses faces inférieure et supérieure, une compression longitudinale résultant du passage d'une paire de convoyeurs animés d'une certaine vitesse à une paire de convoyeurs de vitesse inférieure à la précédente. Ce type d'opération est par exemple décrit dans le brevet EP-0 133 083 B1.

Cependant, il a été constaté que cette opération de crêpage ne permettait pas toujours d'obtenir l'amélioration dans les propriétés mécaniques escomptée.

L'invention s'est alors fixée comme but d'améliorer les propriétés mécaniques de produits d'isolation thermique et/ou phonique (ou tout au moins d'assurer une meilleure constance de ces propriétés d'un produit à l'autre), sans en dégrader les propriétés d'isolation, en se concentrant plus particulièrement sur les produits d'isolation de haute densité ayant subi un crêpage.

Au lieu de chercher à modifier les paramètres du procédé de crêpage habituel, les inventeurs de la présente demande ont étudié les raisons pour lesquelles ce crêpage n'était pas toujours satisfaisant. Ils sont arrivés à la conclusion qu'après crêpage, il arrivait que les fibres ne présentaient pas suffisamment l'orientation isotrope qu'on espérait, et que ceci était dû au fait, notamment, que leurs dimensions n'étaient pas forcément les plus adaptées : les fibres, trop longues, étaient difficiles par simple crêpage à réorienter aussi aléatoirement qu'il était nécessaire pour assurer la meilleure résistance à l'arrachement et à la compression.

L'invention a alors consisté à modifier les conditions de fibrage pour ajuster les dimensions des fibres afin qu'elles se prêtent mieux au crêpage, notamment en les rendant plus courtes. Cette modification a, entre autres, porté sur la façon dont on canalisait les fibres ayant subi l'étirage gazeux à chaud, comme décrit ci-dessous :

L'invention a ainsi tout d'abord pour objet un dispositif de formation de fibres minérales par centrifugation interne comportant :
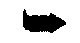 un centrifugeur apte à tourner autour d'un axe, notamment vertical, et dont la bande périphérique est percée d'une pluralité d'orifices,
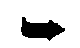 un moyen d'étirage gazeux à haute température sous forme d'un brûleur annulaire,
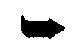 un moyen pneumatique pour canaliser/ajuster les dimensions des fibres sous forme d'une couronne de soufflage.

L'invention prévoit en outre que la canalisation/l'ajustement des dimensions des fibres ajustées par ledit moyen pneumatique soient complétés par au moins un autre moyen, dont un moyen mécanique comprenant une paroi refroidie disposée autour du centrifugeur en regard de sa bande périphérique au moins.

Le brûleur annulaire peut par exemple être du type décrit dans le brevet EP-0 189 354 B1 précité.

La couronne de soufflage peut par exemple être du type décrit dans le brevet EP-0 519 797 B1 précité. Ce brevet expliquait déjà que la nappe de gaz à température ambiante émise par la couronne de soufflage enveloppant les jets de gaz d'étirage du brûleur annulaire, avait le rôle de canaliser les fibres, de resserrer le tore formé par les fibres entre le moment où elles sont éjectées par le centrifugeur et celui où elles sont recueillies par l'organe de réception situé sous le centrifugeur.

En fait, schématiquement, cette nappe de gaz n'est pas une barrière pneumatique "étanche", en ce sens que tout ou partie des fibres sont animées d'une force centrifuge suffisante pour la traverser. Par contre, cette barrière pneumatique vient les freiner, infléchir éventuellement la direction de leur mouvement ; mais aussi agir sur leurs dimensions : quand les fibres viennent heurter la nappe de gaz froid, le choc qui en résulte est suffisamment fort pour que les fibres puissent éventuellement être brisées.

C'est donc un moyen pour contrôler la longueur des fibres. Cependant, il s'est révélé insuffisant pour véritablement obtenir une longueur de fibres suffisamment courte pour autoriser un crêpage dans de meilleures conditions sans pour autant compromettre leurs capacités d'isolation. Le moyen mécanique additionnel préconisé par l'invention s'est montré très efficace pour compléter l'action de la couronne de soufflage et offrir plus de possibilités pour contrôler la dimension des fibres. Il s'agit ici donc d'ajouter à la barrière pneumatique de la couronne de soufflage une autre barrière, cette fois mécanique, disposée autour du centrifugeur au-delà de la barrière pneumatique, qui va elle aussi remplir deux rôles : d'abord, elle va canaliser toutes les fibres, toutes celles ayant déjà pu franchir la première barrière pneumatique, sous l'organe récepteur des fibres, ensuite, elle va permettre d'ajuster plus finement la longueur des fibres recueillies : les heurts des fibres contre la paroi physique permettent très efficacement de les raccourcir pour obtenir un crêpage optimal. Outre le crêpage facilité, l'invention permet aussi d'obtenir des fibres dont les dimensions sont moins dispersées, dont l'histogramme des tailles, tend à être plus resserré. Enfin, les fibres plus courtes ont aussi moins tendance à former des agglomérats de fibres collées entre elles, fibres collées qui abaissent aussi bien la qualité thermique que mécanique du produit final, tout particulièrement sa résistance à l'arrachement.

En fait quand on fabrique des produits d'isolation à forte densité, le diamètre des fibres est un paramètre moins crucial pour obtenir un bon niveau d'isolation thermique que pour les produits plus légers : on peut ainsi " se permettre " d'avoir des fibres plus grosses pour une meilleure résistance mécanique. Le diamètre est une caractéristique que l'on peut notamment contrôler par le choix des paramètres de fonctionnement du brûleur annulaire et par le débit de verre alimentant le centrifugeur. Cependant, plus les fibres sont grosses et plus elles sont longues généralement. C'est là où l'invention intervient, la paroi mécanique permettant, très schématiquement, de couper ces grosses fibres pour faciliter leur crêpage en gardant leurs propriétés mécaniques.

Cependant l'invention s'applique de façon plus générale à des fibres de toutes dimensions, de tout diamètre.

La barrière pneumatique et la barrière mécanique se combinent, la première permettant de moduler la vitesse, la direction de mouvement des fibres, voire déjà de les couper, la seconde venant les bloquer dans leur expansion radiale et achever leur ajustement en longueur. Généralement, la majorité des fibres éjectées du centrifugeur, notamment au moins 80 à 90% des fibres, viennent heurter la paroi refroidie, le reste ayant pour l'essentiel été stoppé par les gaz de la couronne de soufflage. Tout comme la barrière pneumatique, on peut moduler très librement la configuration et les paramètres de cette paroi, notamment sa géométrie et sa position relative par rapport au centrifugeur, au brûleur annulaire, à la couronne de soufflage. Cette paroi est refroidie, de façon à ce que les fibres qui entrent en contact avec elle, qui sont encore relativement chaudes, ne risquent pas de s'y coller.

Avantageusement, la surface extérieure de la paroi refroidie tournée vers le centrifugeur est essentiellement métallique, notamment à base d'acier inoxydable.

De préférence, cette surface extérieure est concentrique autour de l'axe du centrifugeur, en une partie ou en plusieurs parties solidarisées par des éléments de liaison mécanique. Cette surface extérieure est de préférence au moins partiellement cylindrique ou sous forme d'un tronc de cône. (Dans ce dernier cas, le cône est de préférence évasé dans sa partie supérieure. Dans tout le présent texte, par convention, "inférieur" et "supérieur" se rapportent à une hauteur projetée selon un axe vertical). Cette conicité est favorable, car elle va permettre de mieux rabattre les fibres, et de faciliter une interaction avec les gaz émis par la couronne de soufflage comme cela sera détaillé plus loin. Avantageusement, la paroi refroidie est au moins en partie sous forme d'un tronc de cône incliné d'un angle α₁ par rapport à l'axe X₁ du centrifugeur compris entre 0 et 30°, notamment strictement supérieur à 0°, par exemple entre 2 et 20° ou entre 5 et 15°. (Dans les cas les plus fréquemment rencontrés, l'axe du centrifugeur est vertical ou proche de la verticale).

On peut aussi caractériser la paroi refroidie par rapport à l'axe X₂ de projection des jets de gaz (ou de la nappe gazeuse) issus de la couronne de soufflage. On peut ainsi avoir avantageusement un angle d'inclinaison α₂ de la paroi sous forme d'un tronc de cône par rapport à l'axe X₂ qui est compris entre 0 et 60 ou 70°, notamment entre 2 et 20 ou 30°, ou entre 5 et 15°.

L'angle α₃ que fait l'axe X₂ avec la verticale peut être égale à 0. Dans ce cas, on va avoir, au vu des valeurs de α₁ et/ou de α₂ décrits plus haut, une convergence des gaz de la couronne de soufflage vers la paroi refroidie.

Mais cet angle α₃ peut différer de 0°. Avantageusement si α₃ est compris entre +30° et -30°, on se trouve dans le cas précité d'une convergence des gaz de la couronne de soufflage vers la paroi refroidie. Par contre, si α₃ a une amplitude supérieure à 30°, (jusqu'à 90°), on peut avoir le cas de figure où il n'y a plus nécessairement convergence des gaz issus de la couronne de soufflage vers la paroi refroidie, mais plutôt convergence de ces gaz vers le plan selon lequel est disposée la bande périphérique percée d'orifices du centrifugeur.

De préférence, la hauteur de la paroi refroidie mesurée selon un axe vertical est supérieure à celle de la bande périphérique du centrifugeur, la distance mesurée verticalement entre l'extrémité inférieure de ladite paroi et la rangée d'orifices la plus basse du centrifugeur étant égale à au moins la moitié de la hauteur de la bande périphérique, notamment entre la moitié et le double de ladite hauteur.

La paroi offre ainsi une surface suffisante pour cantonner la trajectoire des fibres sous le centrifugeur, pour mieux accompagner et canaliser leurs trajectoires vers l'organe de réception et garantir que toutes les fibres ou quasiment toutes sont affectées par la présence de cette paroi, même celles issues des rangées d'orifice les plus basses du centrifugeur.

Le mode de réalisation le plus simple de cette paroi refroidie consiste à l'intégrer dans un dispositif mécanique présentant une cavité munie d'un système de refroidissement par circulation de fluide du type eau, notamment un dispositif du type boîte à eau ("waterjacket" en anglais). On utilise aussi une boîte à eau annulaire autour et en dessous du centrifugeur.

Avantageusement, la configuration du moyen pneumatique et celle de la paroi sont telles que les jets de gaz issus de la couronne de soufflage ont une direction d'émission en sortie de la couronne qui converge vers la paroi refroidie, convergence s'opérant de préférence à une hauteur inférieure à celle du milieu de la bande périphérique. En fait, les jets de gaz peuvent être conçus de façon à longer, au moins en partie, la paroi. Comme ceux-ci sont émis généralement verticalement, la conicité de la paroi évoquée plus haut va permettre une convergence progressive et contraindre les jets de gaz à venir longer la paroi, au moins dans sa partie inférieure. Comme évoqué plus haut, cette convergence n'est pas systématique, certains modes de réalisation faisant partie de l'invention incluent une divergence, les jets de gaz émis par la couronne de soufflage pouvant être dirigés vers la paroi du centrifugeur plutôt que vers la paroi refroidie selon l'invention.

On prévoit de préférence que le bord supérieur de la paroi refroidie est plus éloigné de l'axe du centrifugeur que ne le sont les points d'émission de gaz de la couronne de soufflage. Préférentiellement, on peut configurer la paroi refroidie de façon à ce que son bord supérieur se trouve accolé aux points d'émission des gaz de la couronne de soufflage, points d'émission qui sont par exemple sous forme d'orifices d'une conduite annulaire, de tétons ou de buses comme détaillé par la suite. On peut aussi l'en éloigner un peu : avantageusement, ce bord supérieur est à une distance x₁ (mesurée radialement par rapport à l'axe du centrifugeur) des axes de projection des jets gazeux (ou, autrement dit, des centres des orifices émettant les jets de gaz) d'au plus de 40 mm, notamment d'au plus 20 mm et d'au moins 0,5 mm.

La couronne de soufflage préférée comporte des éléments générateurs de jets de gaz, de préférence individualisés et divergents se rejoignant en dessous de la rangée d'orifices la plus basse de la bande périphérique. Deux modes de réalisation sont préférés : un anneau tubulaire percé d'orifices sur lesquels sont fixés des tétons ou une série de buses.

Avantageusement, la température des gaz d'étirage émis à la sortie du brûleur annulaire est d'au plus 1600°C, notamment comprise entre 1350 et 1450°C : c'est une température qui peut donc être moins élevée que celle que l'on peut rencontrer en centrifugation interne, la température des gaz d'étirage étant généralement d'au moins 1500°C, et plutôt aux environs de 1600°C. Des gaz d'étirage "plus froids", outre le gain énergétique induit, présentent l'intérêt de moins détériorer le liant que l'on vient pulvériser sur les fibres sous le centrifugeur, les fibres ayant de fait une température moins élevée au moment de la pulvérisation. Il est également vraisemblable que des fibres étirées à des températures inférieures aux températures habituelles seraient plus "fragiles" mécaniquement, ce qui faciliterait leur coupure en fibres courtes lors de leur traversée de la nappe froide émise par la couronne de soufflage puis leur impact contre la paroi mécanique selon l'invention. Ce choix de température d'étirage contribuerait ainsi également, indirectement, à l'ajustement des dimensions des fibres.

Un moyen additionnel optionnel pour canaliser/ajuster les dimensions des fibres est structurel : il consiste à ajuster le perçage de la bande périphérique de façon à ce que la taille des orifices, disposés en rangées concentriques, varie de haut en bas sur la hauteur du centrifugeur en position de centrifugation, cette taille d'orifices diminuant puis augmentant à nouveau sur ladite hauteur.

Selon un mode de réalisation préféré, les orifices sont répartis en groupes de rangées concentriques avec, de haut en bas, au moins un premier groupe de n₁ rangées " hautes " d'orifices circulaires de diamètre d₁, un second groupe de n₂ rangées " intermédiaires " d'orifices circulaires de diamètre d₂ inférieur à d₁ et enfin un troisième groupe de n₃ rangées " basses " d'orifices circulaires de diamètre d₃ supérieur au diamètre d₂, avec n₁, n₂, n₃ ≥ 1 et notamment compris entre 3 et 10. De préférence, on a les relations suivantes entre les diamètres d₁, d₂ et d₃ :
① - d₁ est voisin de d₃, avec d₁=d₃ + /-0,2 mm, notamment d₁=d₃ ± 0,1 mm,
② - d₃-d₂ ≈ d₁-d₂,
③ - d₃-d₂ compris entre 0,1 et 0,5 mm, avec notamment d₃-d₂ > 0,1 mm ou ≥0.2mm

L'invention a également pour objet le procédé de formation des fibres, utilisant notamment le dispositif décrit ci-dessus et consistant en une centrifugation interne associée à un étirage gazeux à haute température selon lequel le matériau à fibre est déversé à l'intérieur du centrifugeur tournant selon un axe essentiellement vertical et dont la bande périphérique est percée d'une pluralité d'orifices, d'où le matériau est éjecté puis étiré par un courant gazeux à haute température émis par un brûleur annulaire, les fibres étant canalisées, ajustées en dimension par un organe pneumatique sous forme d'une couronne de soufflage. Le procédé est tel que l'on complète cette canalisation, cet ajustement en dimensions par au moins un autre moyen, dont un moyen mécanique faisant barrière physiquement à la propagation des fibres radialement par rapport à l'une du centrifugeur : il s'agit de la paroi refroidie décrite plus haut.

Le procédé de l'invention consiste à ajuster la configuration de ce moyen mécanique, les paramètres de gaz d'étirage et des gaz de la couronne de soufflage, et optionnellement le perçage de la bande périphérique du centrifugeur par fabrique de la laine minérale de micronaire compris entre 3 et 8 sous 5 grammes. Le diamètre moyen des fibres constituant la laine minérale est avantageusement compris entre 4 et 13 µm.

L'invention concerne également l'application du procédé et du dispositif décrits plus haut à la fabrication de matériaux d'isolation thermique et/ou phonique de densité supérieure à 40 kg/m³, notamment de 40 à 160 kg/m³, dont la laine minérale a notamment été crêpée.

L'invention concerne également ces produits d'isolation à forte densité eux-mêmes, notamment destinés à faire des panneaux d'isolation pour toit-auto. Généralement, pour une épaisseur de 50 mm, une densité de 80 kg/m³ et un taux de liant massique par rapport à la laine de verre d'environ 6%, on obtient :
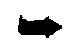 une résistance à l'arrachement d'environ 20 ± 3 kPA,
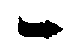 une résistance à la compression à 10% d'environ 60 ± 5 kPA,
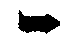 une conductivité thermique d'au plus 38 W/m.k.

L'invention sera décrite plus en détails ci-après à l'aide des figures suivantes :
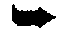 **figure 1** : une vue schématique en coupe verticale de l'installation de fibrage selon l'invention,
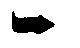 **figure 2** : une vue schématique agrandie en coupe verticale du centrifugeur selon une première variante,
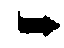 **figure 3** : une vue schématique agrandie en coupe verticale du centrifugeur selon une seconde variante.

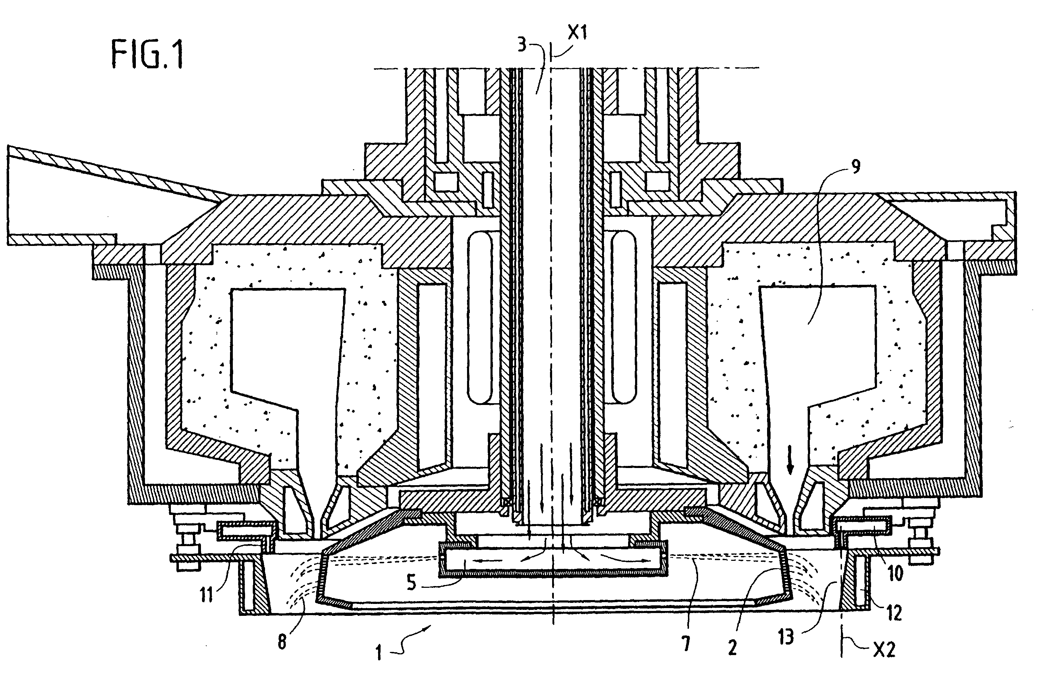

La figure 1 représente très schématiquement une installation de fibrage propre à la mise en oeuvre de l'invention et voisine de l'enseignement du brevet EP 0 519 797 en ce qui concerne le centrifugeur, le brûleur annulaire et la couronne de soufflage. Cette installation est essentiellement constituée par un centrifugeur sans fond 1 dont la bande périphérique 2 est percée d'un grand nombre d'orifices, fixés à un moyeu en prise sur l'arbre de rotation 3 selon un axe X₁ monté vertical , entraîne par un moteur non représenté. Le filet de verre fondu alimente le centrifugeur en passant par l'arbre creux 3 et s'écoule dans un panier 5 à fond plein pourvu d'une paroi cylindrique percée d'un petit nombre d'orifices relativement gros, par perçage et par exemple, d'un diamètre de l'ordre de 3 mm grâce auxquels le verre fondu est distribué sous forme de filets primaires 7 dirigés vers l'intérieur de la bande périphérique d'où il est expulsé sous l'effet de la force centrifuge sous forme de filaments 8.

Le centrifugeur est entouré d'un brûleur annulaire 9 et d'une couronne de soufflage 10. Les rangées sont réparties en trois groupes de haut en bas : les rangés intermédiaires ont un diamètre de trou inférieur aux rangées hautes et basse d'au moins 0,1 ou 0.2 mm.

Le brûleur annulaire 9 (conforme à l'enseignement du brevet EP-0 189 354) engendre un jet gazeux dont la température aux lèvres du brûleur est de l'ordre de 1450°C.

La finesse des fibres est déterminée par la valeur de leur micronaire (F) sous 5g. La mesure du micronaire appelée aussi 'indice de finesse" rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est normalisée (DIN 53941 ou ASTM D 1448) et elle utilise un appareil dit "appareil micronaire".

La couronne de soufflage 10 est constituée par un anneau tubulaire dont les orifices sont munis de tétons 11 fixés par exemple par soudure. En permettant un guidage prolongé des jets, les tétons conduisent à une plus grande stabilité des conditions d'émission des jets individualisés et de ce fait la régularité de fonctionnement de la couronne en est favorablement affectée.

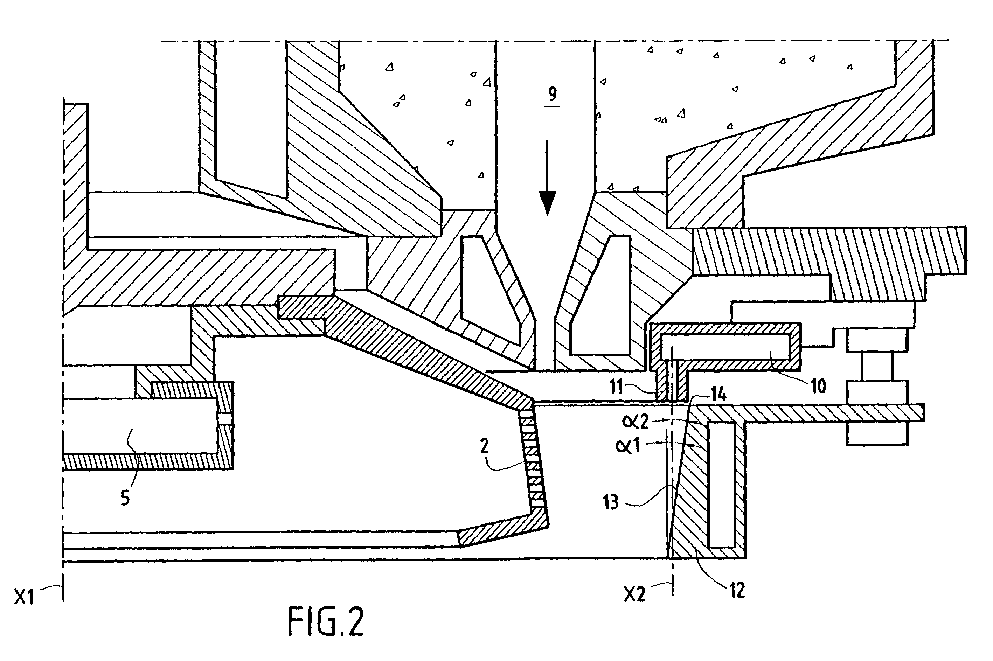

Selon l'invention, et comme cela est représenté plus clairement en figure 2 , il y a un dispositif annulaire 12 comprenant une paroi extérieure 13 en acier inoxydable tournée vers le centrifugeur 2 et sous la forme d'un tronc de cône évasé vers le haut. Cette paroi fait un angle α1 d'environ 5 à 12° par rapport à la verticale. Dans le cas particulier non limitatif de la figure 2, l'axe vertical est confondu avec l'axe de rotation X1 du centrifugeur et avec l'axe d'émission X2 des jets de gaz issus de la couronne de soufflage 10.

Le bord supérieur 14 de la paroi 13 est accolé à la paroi des tétons 11 de la couronne de soufflage. Son bord inférieur est à une hauteur nettement inférieure à celle de la rangée d'orifices la plus basse du centrifugeur.

Cette paroi 13 appartient donc à un dispositif de forme sensiblement annulaire disposé en regard du centrifugeur, qui est du type "boîte à eau" : il est muni dans sa cavité d'un système de refroidissement par circulation d'eau pour assurer que la paroi avec laquelle les fibres vont entrer en contact reste à une température suffisamment faible pour qu'elle n'y restent pas collées, mais "rebondissent" et se brisent éventuellement sous l'impact.

En fonctionnement, les fibres en cours de formation parviennent à franchir pour la majorité d'entre elles, la nappe gazeuse froide émise par la couronne de soufflage 10, et viennent heurter la paroi 13 de façon à se rabattre en direction convergeante vers l'organe de réception non représenté.

N'est pas représentée non plus, car conventionnelle, la couronne de pulvérisation de liant sous le centrifugeur. La laine minérale recueillie en nappe est ensuite traitée thermiquement de façon conventionnelle pour réticuler le liant notamment, puis subit un crêpage selon l'enseignement du brevet EP-0 133 083.

Les fibres obtenues présentent un micronaire d'environ 7 sous 5 grammes.

Leurs performances thermiques et mécaniques à 80 kg/m³ ont été mentionnées plus haut.

Par ailleurs, il a été constaté que les propriétés mécaniques de ce type de produit d'isolation lourd étaient aussi bonnes, voire meilleures, quand pour un même centrifugeur on augmente la tirée de 22 tonnes/jour à 35 tonnes/jour. C'est tout-à-fait remarquable dans la mesure où on observe généralement la tendance inverse à savoir une détérioration progressive des propriétés mécaniques quand le rendement de production augmente dans le cas des produits dits légers ou de faible densité (c'est-à-dire d'une densité inférieure à 40 kg/m3). C'est une conséquence étonnante et avantageuse de l'invention, pouvant peut-être s'expliquer par le fait que plus le débit de verre éjecté du centrifugeur est élevé, plus les impacts des fibres sur la paroi refroidie sont importants/violents et plus on réduit la taille des fibres.

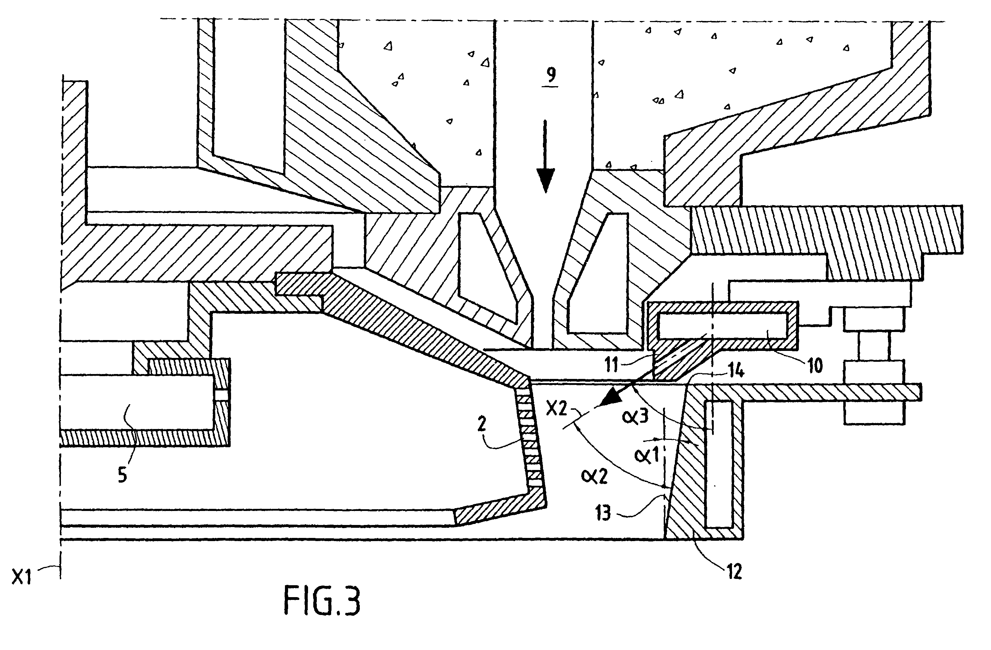

La figure 3 reprend les éléments structurels déjà décrits en figure 2. Dans ce mode de réalisation, les jets de gaz issus de la couronne de soufflage 10 sont émis selon un axe X2 qui fait un angle α3 d'environ 60° avec la verticale. Ces jets sont dirigés vers la bande périphérique 2 du centrifugeur, et non vers la paroi refroidie 13.

Les deux modes de réalisation représentés aux figures 2 et 3 ne sont pas limitatifs de l'invention: beaucoup d'autres configurations sont possibles. Ainsi, on peut configurer l'élément 12 ainsi que la couronne 10 avec ses tétons 11, de façon à ce que la surface sensiblement horizontale de la partie supérieure de l'élément 12 se trouve à un niveau plus élevé, par rapport à la verticale, que l'extrémité des tétons 11 (soit en modifiant la géométrie des tétons, en les inclinant par exemple, soit en modifiant la géométrie de la zone supérieure de l'élément 12, notamment celle de son bord 14) : on "remonte" ainsi l'élément 12 par rapport aux tétons 11. On peut aussi choisir la démarche inverse, en "abaissant" un peu l'élément 12 par rapport auxdits tétons 11, la seule contrainte étant d'éviter cependant que des fibres puissent passer au-dessus de la paroi 13 refroidie.

## Revendications

1. Dispositif de formation de fibres minérales par centrifugation interne comportant :
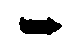 un centrifugeur (1) apte à tourner autour d'un axe X₁, notamment vertical et dont la bande périphérique (2) est percée d'une pluralité d'orifices,
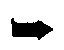 un moyen d'étirage gazeux à haute température sous forme d'un brûleur annulaire (9),
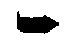 un moyen pneumatique pour canaliser/ajuster les dimensions des fibres sous forme d'une couronne de soufflage (10),
***caractérisé en ce que*** la canalisation et l'ajustement des dimensions des fibres opérées par ledit moyen pneumatique sont complétés par au moins un autre moyen, dont un moyen mécanique (12) comprenant une paroi refroidie (13) disposée autour du centrifugeur (1) en regard de sa bande périphérique (2) au moins.

2. Dispositif selon la revendication 1, ***caractérisé en ce que*** la surface de la paroi refroidie (13) tournée vers le centrifugeur (1) est essentiellement métallique, notamment en acier inoxydable .

3. Dispositif selon l'une des revendications précédentes, ***caractérisé en ce que*** la paroi refroidie (13) est concentrique autour de l'axe du centrifugeur (1), et présente une surface extérieure dirigée vers le centrifugeur (1) qui est au moins partiellement cylindrique ou sous forme d'un tronc de cône, de préférence évasé en partie supérieure.

4. Dispositif selon l'une des revendications précédentes, ***caractérisé en ce que*** la paroi refroidie (13) est au moins en partie sousforme d'un tronc de cône incliné d'un angle α₁ par rapport à l'axe X₁ du centrifugeur (1) compris entre 0 et 30°, notamment strictement positif et de préférence compris entre 2 et 20°.

5. Dispositif selon l'une des revendications précédentes, ***caractérisé en ce que*** la paroi (13) refroidie est au moins en partie sous forme d'un tronc de cône incliné d'un angle α₂ par rapport à l'axe X₂ de projection des jets de gaz issus de la couronne de soufflage (10) compris entre 0 et 60 ou 70°, notamment égal à 0 ou compris entre 2 et 20 ou 30° ou entre 5 et 15°.

6. Dispositif selon l'une des revendications précédentes, ***caractérisé en ce que*** l'axe X₂ de projection des jets de gaz issus de la couronne de soufflage (10) fait un angle α3 avec la verticale qui est égal à 0 ou différent de 0, notamment de ± 30° ou d'amplitude supérieure.

7. Dispositif selon l'une des revendications précédentes, ***caractérisé en ce que*** la hauteur de la paroi refroidie (13) mesurée selon un axe vertical est supérieure à celle de la bande périphérique (2) du centrifugeur (1), la distance mesurée verticalement entre l'extrémité inférieure de ladite paroi et la rangée d'orifices la plus basse du centrifugeur (1) étant égale à au moins la moitié de la hauteur de la bande périphérique (2), notamment entre la moitié et le double de ladite hauteur.

8. Dispositif selon l'une des revendications précédentes, ***caractérisé en ce que*** la paroi refroidie (13) fait partie d'un dispositif mécanique (12) présentant une cavité munie d'un système de refroidissement par circulation de liquide, dispositif notamment de type boîte à eau.

9. Dispositif selon l'une des revendications précédentes, ***caractérisé en ce que*** la configuration du moyen pneumatique par rapport à celle de la paroi refroidie (13) est telle que les jets de gaz issus de la couronne de soufflage (10) ont une direction d'émission qui converge vers la paroi refroidie.

10. Dispositif selon l'une des revendications précédentes, ***caractérisé en ce que*** la couronne de soufflage (10) comporte des éléments générateurs de jets de gaz individualisés divergents se rejoignant au-dessous de la rangée d'orifices la plus basse de la bande périphérique, ladite couronne étant notamment constituée par un anneau tubulaire percé d'orifices sur lesquels sont fixés les tétons (11) ou par une série de buses.

11. Dispositif selon l'une des revendications précédentes, ***caractérisé en ce que*** la température du gaz d'étirage émis à la sortie du brûleur annulaire est d'au plus 1600°C, notamment comprise entre 1350 et 1450°C.

12. Dispositif selon l'une des revendications précédentes, ***caractérisé en ce qu'un*** moyen supplémentaire est prévu pour canaliser/ajuster les dimensions des fibres, moyen structurel consistant à prévoir une taille pour les orifices de la bande périphérique qui, de haut en bas en position de centrifugation, varie en diminuant puis en augmentant sur la hauteur de la bande périphérique (2).

13. Dispositif selon la revendication 12, ***caractérisé en ce que*** les orifices de la bande périphérique (12) sont répartis en trois groupes de rangées hautes, intermédiaires et basses ayant des diamètres d1, d2, d3 respectant les relations suivantes :
① - d₁=d₃ +/- 0,2 mm, de préférence d₁=d₃ ± 0,1 mm,
② - d₃-d₂ ≈ d₁-d₂,
③ - d₃-d₂ compris entre 0,1 et 0,5 mm, notamment supérieur à 0,1 ou 0.2 mm.

14. Procédé de formation de fibres minérales par centrifugation interne associée à un étirage gazeux à haute température selon lequel le matériau à fibrer est déversé à l'intérieur d'un centrifugeur (1) tournant autour d'un axe notamment vertical et dont la bande périphérique (2) est percée d'une pluralité d'orifices, d'où le matériau est éjecté puis étiré par un courant gazeux à haute température émis par un brûleur annulaire (9), les fibres étant canalisées/ajustées en dimension par un moyen pneumatique sous forme d'une couronne de soufflage (10), ***caractérisé en ce qu'on*** complète la canalisation et l'ajustement en dimension de fibres par au moins un autre moyen, dont un moyen mécanique (12) faisant barrière physiquement à la propagation des fibres radialement par rapport à l'axe X1 du centrifugeur (1).

15. Procédé selon la revendication 14, ***caractérisé en ce que*** la barrière physique est un élément mécanique offrant une paroi (13) disposée autour du centrifugeur en regard de la bande périphérique (2), notamment refroidie et essentiellement métallique au moins en surface.

16. Procédé selon la revendication 14 ou 15, ***caractérisé en ce que*** ladite paroi (13) est au moins partiellement cylindrique ou sous forme d'un tronc de cône évasé de préférence en partie supérieure.

17. Procédé selon l'une des revendications 14 à 16, ***caractérisé en ce que*** les jets de gaz émis par la couronne de soufflage (10) convergent vers cette paroi (12) et/ou la longent au moins en partie.

18. Procédé selon l'une des revendications 14 à 17, ***caractérisé en ce que*** les jets de gaz émis par la couronne de soufflage (10) sont individualisés, divergents, et se rejoignent après la rangée d'orifices la plus basse du centrifugeur (1).

19. Procédé selon l'une des revendications 14 à 16, ***caractérisé en ce que*** les gaz émis par la couronne de soufflage (10) convergent vers la bande périphérique (2) du centrifugeur (1).

20. Procédé selon l'une des revendications 14 à 19, ***caractérisé en ce que*** les gaz d'étirage sont émis à la sortie du brûleur annulaire (9) à une température d'au plus 1600°C, notamment comprise entre 1350 et 1450°C.

21. Procédé selon l'une des revendications 15 à 20, ***caractérisé en ce que*** la majorité des fibres éjectées du centrifugeur viennent heurter la paroi (12).

22. Application du dispositif selon l'une des revendications 1 à 13 ou du procédé selon l'une des revendications 14 à 21 à la fabrication de laine minérale de micronaire compris entre 3 et 8 sous 5 grammes.

23. Application du dispositif selon l'une des revendications 1 à 13 ou du procédé selon l'une des revendications 14 à 22 à la fabrication de matériau d'isolation thermique et/ou phonique de densité supérieure à 40 kg/m³, notamment de type crêpés.

24. Produits d'isolation thermique ou phonique de densité au moins 40 kg/m³, notamment compris entre 40 et 160 kg/m³, obtenus à partir de laine minérale obtenue avec le dispositif selon l'une des revendications 1 à 13 ou selon le procédé conforme à l'une des revendications 14 à 22 puis crêpée, et présentant notamment une résistance à l'arrachement d'environ 20 kPA et une résistance à la compression d'environ 60 kPA pour une épaisseur d'environ 50 mm, un taux de liant d'environ 6% et une densité de 80 kg/m³.

## Patentansprüche

1. Vorrichtung zum Bilden von Mineralfasern durch innere Zentrifugierung, welche aufweist:
- ein um eine insbesondere vertikale Achse X₁ drehbares Schleuderorgan (1), dessen Umfangsstreifen (2) von einer Mehrzahl von Öffnungen durchsetzt ist,
- eine Hochlemperatur-Gasauszieheinrichtung in Form eines Ringbrenners (9),
- eine pneumatische Einrichtung zum Kanalisieren/Einstellen der Abmessungen der Fasern in Form eines Blaskranzes (10),
**dadurch gekennzeichnet, daß** das durch die pneumatische Einrichtung bewirkte Kanalisieren und Einstellen der Abmessungen der Fasern ergänzend durch mindestens eine weitere Einrichtung wie etwa eine mechanische Einrichtung (12) durchgeführt werden, welche eine gekühlte Wandung (13) aufweist, die so um das Schleuderorgan (1) angeordnet ist, daß sie zumindest dessen Umfangsstreifen (2) gegenüberliegt.

2. Vorrichtung nach Anspruch 1, **dadurch gekennzeichnet, daß** die zum Schleuderorgan (1) hinweisende Oberfläche der gekühlten Wandung (13) im wesentlichen aus Metall, insbesondere aus nichtrostendem Stahl besteht.

3. Vorrichtung nach einem der vorhergehenden Ansprüche, **dadurch gekennzeichnet, daß** die gekühlte Wandung (13) konzentrisch um die Achse des Schleuderorgans (1) angeordnet ist und eine auf das Schleuderorgan (1) hinweisende Außenfläche aufweist, die zumindest teilweise zylindrisch oder kegelstumpfförmig, bevorzugt im oberen Abschnitt ausgebaucht ist.

4. Vorrichtung nach cinem der vorhergehenden Ansprüche, **dadurch gekennzeichnet, daß** die gekühlte Wandung (13) zumindest teilweise die Form eines Kegelstumpfes aufweist, der in bezug auf die Achse X₁ des Schleuderorgans (1) in einem Winkel α₁ geneigt ist, welcher zwischen 0 und 30° beträgt, insbesondere grundsätzlich positiv ist, und bevorzugt zwischen 2 und 20° beträgt.

5. Vorrichtung nach cinem der vorhergehenden Ansprüche, **dadurch gekennzeichnet, daß** die gekühlte Wandung (13) zumindest teilweise die Form eines Kegelstumpfes aufweist, der in bezug auf die Ausstoßachse X₂ der aus dem Blaskranz (10) austretenden Gasstrahlen in einem Winkel α₂ geneigt ist, welcher zwischen 0 und 60 bzw. 70° beträgt, insbesondere gleich 0 ist, oder zwischen 2 und 20 bzw. 30° oder zwischen 5 und 15° beträgt.

6. Vorrichtung nach einem der vorhergehenden Ansprüche, **dadurch gekennzeichnet, daß** die Ausstoßachse X₂ der aus dem Blaskranz (10) austretenden Gasstrahlen mit der Vertikalen einen Winkel α₃ bildet, der gleich 0 ist oder von 0 verschieden isi, und zwar insbesondere mit ±30° oder einer größeren Amplitude.

7. Vorrichtung nach einem der vorhergehenden Ansprüche, **dadurch gekennzeichnet, daß** die entlang einer Vertikalachse gemessene Höhe der gekühlten Wandung (13) größer als diejenige des Umfangsstreifens (2) des Schleuderorgans (1) ist, wobei der vertikal gemessene Abstand zwischen dem unteren Ende der Wandung und der unlersten Reihe von Öffnungen des Schleuderorgans (1) gleich mindestens der Hälfte der Höhe des Umfangsstreifens (2) ist und insbesondere zwischen der Hälfte und dem Zweifachen dieser Höhe beträgt.

8. Vorrichtung nach einem der vorhergehenden Ansprüche, **dadurch gekennzeichnet, daß** die gekühlte Wandung (13) Teil einer mechanischen Vorrichtung (12) mit einem Hohlraum darstellt, der mit einem System zum Kühlen mittels Umwälzung einer Flüssigkeit, insbesondere vom Typ eines Wassertanks, versehen ist.

9. Vorrichtung nach einem der vorhergehenden Ansprüche, **dadurch gekennzeichnet, daß** die Gestaltung der pneumatischen Einrichtung in bezug auf diejenige der gekühlten Wandung (13) solcherart ist, daß die aus dem Blaskranz (10) austretenden Gasstrahlen eine auf die gekühlte Wandung hin konvergierende Abgaberichtung aufweisen.

10. Vorrichtung nach einem der vorhergehenden Ansprüche, **dadurch gekennzeichnet, daß** der Blaskranz (10) Elemente zum Erzeugen von vereinzelten divergierenden Gasstrahlen aufweist, die sich unterhalb der untersten Reihe von Öffnungen des Umfangsstreifens vereinigen, wobei der Kranz insbesondere aus einem röhrenförmigen Ring hesteht, der von Öffnungen durchsetzt ist, an denen die Blasstutzen (11) befestigt sind, oder aus einer Serie von Düsen besieht.

11. Vorrichtung nach einem der vorhergehenden Ansprüche, **dadurch gekennzeichnet, daß** die Temperatur des abgegebenen Auszichgases beim Austritt aus dem Ringbrenner höchstens 1600°C, insbesondere zwischen 1350 und 1450°C beträgt.

12. Vorrichtung nach einem der vorhergehenden Ansprüche, **dadurch gekennzeichnet, daß** eine zusätzliche Einrichtung zum Kanalisieren / Einstellen der Abmessungen der Fasern vorgesehen ist, bei der es sich um eine bauliche Maßnahme handelt, welche darin besteht, daß für die Öffnungen des Umfangsstreifens eine Größe vorgesehen wird, die an der Abschleuderposition von oben nach unten variiert, indem sie über die Höhe des Umfangsstreifens (2) abnimmt und daraufhin zunimmt.

13. Vorrichtung nach Anspruch 12, **dadurch gekennzeichnet, daß** die Öffnungen des Umfangsstreifens (12) in drei Gruppen von oberen, mittleren und unteren Reihen mit Durchmessern d₁, d₂ bzw. d₃ aufgeteilt sind, welche die folgenden Beziebungen erfüllen:
① - d₁ = d₃ ±0,2 mm, bevorzugt d₁ = d₃ ±0,1 mm,
② - d₃ - d₂ ≈ d₁ - d₂,
③ - d₃ - d₂ beträgt zwischen 0,1 und 0,5 mm, insbesondere mehr als 0,1 oder 0,2 mm,

14. Verfahren zum Bilden von Mineralfasern durch innere Zentrifugierung in Verbindung mit einem Hochtemperatur-Gasausziehen, gemäß dem das zu zerfasernde Material ins Innere eines Schleuderorgans (1) gegossen wird, das um eine insbesondere vertikale Achse dreht und dessen Umfangsstreifen (2) von einer Mehrzahl von Öffnungen durchsetzt ist, aus denen das Material ausgeworfen und damufhin durch einen von einem Ringbrenner (9) abgegebenen Gasstrom mit hoher Temperatur ausgezogen wird, wobei durch eine pneumatische Einrichtung in Form eines Blaskranzes (10) die Fasern kanalisiert / die Faserabmessungen eingestellt werden, **dadurch gekennzeichnet, daß** das Kanalisiseren und das Einstellen der Abmessungen der Fasern mit Hilfe mindestens einer weiteren Einrichtung wie etwa einer mechanischen Einrichtung (12) ergänzt werden, welche körperlich eine Barriere gegen eine Bewegung der Fasern in Axialrichtung in bezug auf die Achse X₁ des Schleudcrorgans (1) darstellt.

15. Verfahren nach Anspruch 14, **dadurch gekennzeichnet, daß** die körperliche Barriere ein mechanisches Element ist, welches eine Wandung (13) aufweist, die so um das Schleuderorgan angeordnet ist, daß sie dem Umfangsstreifen (2) gegenüberliegt, die insbesondere gekühlt ist, und die zumindest an der Oberfläche im wesentlichen aus Metall besteht.

16. Verfahren nach Anspruch 14 oder 15, **dadurch gekennzeichnet, daß** die Wandung (13) zumindest teilweise zylindrisch ist oder die Form eines bevorzugt im oberen Abschnitt ausgebauchten Kegelstumpfes besitzt.

17. Verfahren nach einem der Ansprüche 14 bis 16, **dadurch gekennzeichnet, daß** die vom Blaskranz (10) abgegebcnen Gasstrahlen auf diese Wandung (12) hin konvergieren und/oder zumindest teilweise daran entlangstreichen.

18. Verfahren nach einem der Ansprüche 14 bis 17, **dadurch gekennzeichnet, daß** die vom Blaskranz (10) abgegebenen Gasstrahlen vereinzelt und divergent sind und sich nach der untersten Reihc von Öffnungen des Schleuderorgans (1) vereinigen.

19. Verfahren nach cinem der Ansprüche 14 bis 16, **dadurch gekennzeichnet, daß** die vom Blaskranz (10) abgegebenen Gase auf den Umfangsstreifen (2) des Schleuderorgans (1) hin konvergieren.

20. Verfahren nach einem der Ansprüche 14 bis 19, **dadurch gekennzeichnet, daß** die Auszichgase beim Austritt aus dem Ringbrenner (9) mit einer Temperatur von höchstens 1600°C, insbesondere zwischen 1350 und 1450°C abgegeben werden.

21. Verfahren nach einem der Ansprüche 15 bis 20, **dadurch gekennzeichnet, daß** die aus dem Schleuderorgan ausworfenen Fasern mehrheitlich auf die Wandung (12) auftreffen.

22. Anwendung der Vorrichtung nach einem der Ansprüche 1 bis 13 oder des Verfahrens nach einem der Ansprüche 14 bis 21 auf die Herstellung von Mineralwolle mil einem Micronaire von zwischen 3 und 8/5 Gramm.

23. Anwendung der vörrichtung nach einem der Ansprüche 1 bis 13 oder des Verfahrens nach einem der Ansprüche 14 bis 22 auf die Herstellung von wärmeund/oder schalldämmendem Material mit einer Dichte von mehr als 40 kg/m³, insbesondere vom gekreppten Typ.

24. Wärme- oder schalldämmende Produkte mit einer Dichte von mindestens 40 kg/m³, insbesondere von zwischen 40 und 160 kg/m³, hergestellt aus Mineralwolle, die mit der Vorrichtung nach einem der Ansprüche 1 bis 13 bzw. gemäß dem Verfahren nach einem der Ansprüche 14 bis 22 erhalten und daraufhin gekreppt wurde, und insbesondere mit einer Reißfestigkeit von ca. 20 kPa und einer Druckfestigkeit von ca. 60 kPa bei einer Dicke von ca. 50 mm, einem Bindemittelanteil von ca. 6% und einer Dichte von 80kg/m³.

## Claims

1. Device for forming mineral fibres by internal centrifugation, comprising:
- a centrifuge (1) which is capable of rotating about an axis X₁, in particular a vertical axis, and the peripheral band (2) of which is pierced by a plurality of orifices,
- a means for gaseous drawing at high temperature, in the form of an annular burner (9),
- a pneumatic means for channelling/adjusting the size of the fibres, in the form of a blower ring (10), **characterised in that** the channelling and size adjustment of the fibres effected by said pneumatic means are completed by at least one other means, including a mechanical means (12) comprising a cooled wall (13) arranged around the centrifuge (1) opposite its peripheral band (2) at least.

2. Device according to claim 1, **characterised in that** the surface of the cooled wall (13) facing the centrifuge (1) is substantially made of metal, in particular of stainless steel.

3. Device according to any one of the preceding claims, **characterised in that** the cooled wall (13) is concentric about the axis of the centrifuge (1) and has an outer surface directed towards the centrifuge (1) which is at least partly cylindrical or in the form of a truncated cone, preferably flared in its upper portion.

4. Device according to any one of the preceding claims, **characterised in that** the cooled wall (13) is at least partly in the form of a truncated cone which is inclined by an angle α₁ relative to the axis X₁ of the centrifuge (1), which angle α₁ is from 0 to 30°, in particular strictly positive and preferably from 2 to 20°.

5. Device according to any one of the preceding claims, **characterised in that** the cooled wall (13) is at least partly in the form of a truncated cone which is inclined by an angle α₂ relative to the axis X₂ of projection of the jets of gas emitted by the blower ring (10), which angle α₂ is from 0 to 60 or 70°, in particular equal to 0 or from 2 to 20 or 30° or from 5 to 15°.

6. Device according to any one of the preceding claims, **characterised in that** the axis X₂ of projection of the jets of gas emitted by the blower ring (10) forms an angle α₃ with the vertical which is equal to 0 or other than 0, in particular an angle of ± 30° or of greater magnitude.

7. Device according to any one of the preceding claims, **characterised in that** the height of the cooled wall (13), measured along a vertical axis, is greater than that of the peripheral band (2) of the centrifuge (1), the distance measured vertically between the lower end of said wall and the lowermost row of orifices of the centrifuge (1) being equal to at least half the height of the peripheral band (2), in particular between half of and twice said height.

8. Device according to any one of the preceding claims, **characterised in that** the cooled wall (13) forms part of a mechanical device (12) having a cavity equipped with a system of cooling by circulation of liquid, in particular a device of the water-tank type.

9. Device according to any one of the preceding claims, **characterised in that** the configuration of the pneumatic means relative to that of the cooled wall (13) is such that the jets of gas emitted from the blower ring (10) have a direction of emission which converges towards the cooled wall.

10. Device according to any one of the preceding claims, **characterised in that** the blower ring (10) comprises elements for generating individual divergent jets of gas which come together beneath the lowermost row of orifices of the peripheral band, said ring being constituted in particular by a tubular ring pierced by orifices on which the nipples (11) are fixed, or by a series of nozzles.

11. Device according to any one of the preceding claims, **characterised in that** the temperature of the drawing gas emitted at the outlet of the annular burner is not more than 1600°C, in particular from 1350 to 1450°C.

12. Device according to any one of the preceding claims, **characterised in that** an additional means is provided for channelling/adjusting the size of the fibres, which structural means consists in the provision of a size for the orifices of the peripheral band which, from top to bottom in the centrifugation position, varies by diminishing and then increasing over the height of the peripheral band (2).

13. Device according to claim 12, **characterised in that** the orifices of the peripheral band (12) are distributed in three groups of upper, intermediate and lower rows having diameters d1, d2, d3 which comply with the following relationships:
1) d₁ = d₃ + 0.2 mm, preferably d₁ = d₃ ± 0.1 mm,
2) d₃ - d₂ ≈ d₁ - d₂,
3) d₃ - d₂ is from 0.1 to 0.5 mm, in particular greater than 0.1 or 0.2 mm.

14. Method of forming mineral fibres by internal centrifugation associated with gaseous drawing at high temperature, according to which the material to be made into fibres is poured into a centrifuge (1) which rotates about an axis, in particular a vertical axis, and the peripheral band (2) of which is pierced by a plurality of orifices, from where the material is ejected and then drawn by a stream of gas at high temperature emitted by an annular burner (9), the fibres being channelled/adjusted in size by a pneumatic means in the form of a blower ring (10), **characterised in that** the channelling and size adjustment of the fibres is completed by at least one other means, including a mechanical means (12) which forms a physical barrier to the spread of the fibres radially relative to the axis X1 of the centrifuge (1).

15. Method according to claim 14, **characterised in that** the physical barrier is a mechanical element having a wall (13) arranged around the centrifuge opposite the peripheral band (2), in particular a wall which is cooled and is substantially made of metal at least on the surface.

16. Method according to either claim 14 or claim 15, **characterised in that** said wall (13) is at least partly cylindrical or in the form of a truncated cone which is preferably flared in its upper portion.

17. Method according to any one of claims 14 to 16, **characterised in that** the jets of gas emitted by the blower ring (10) converge towards the wall (12) and/or flow along at least a portion thereof.

18. Method according to any one of claims 14 to 17, **characterised in that** the jets of gas emitted by the blower ring (10) are individual and divergent and come together after the lowermost row of orifices of the centrifuge (1).

19. Method according to any one of claims 14 to 16, **characterised in that** the gases emitted by the blower ring (10) converge towards the peripheral band (2) of the centrifuge (1).

20. Method according to any one of claims 14 to 19, **characterised in that** the drawing gases are emitted at the outlet of the annular burner (9) at a temperature of not more than 1600°C, in particular from 1350 to 1450°C.

21. Method according to any one of claims 15 to 20, **characterised in that** the majority of the fibres ejected from the centrifuge strike the wall (12).

22. Use of the device according to any one of claims 1 to 13 or of the method according to any one of claims 14 to 21 in the manufacture of mineral wool having a micronaire of from 3 to 8 under 5 grams.

23. Use of the device according to any one of claims 1 to 13 or of the method according to any one of claims 14 to 22 in the manufacture of thermal and/or sound insulating material having a density greater than 40 kg/m³, in particular of the crêpe type.

24. Thermal or sound insulating products having a density of at least 40 kg/m³, in particular from 40 to 160 kg/m³, obtained from mineral wool obtained using the device according to any one of claims 1 to 13 or by the method according to any one of claims 14 to 22 and then crêped, and having in particular a tear strength of approximately 20 kPA and a compressive strength of approximately 60 kPA for a thickness of approximately 50 mm, a binder content of approximately 6 % and density of 80 kg/m³.
